# EUROPÄISCHE PATENTANMELDUNG

(11) **EP 1 142 778 A2**
(43) Veröffentlichungstag der Anmeldung: **10.10.2001**
(21) Anmeldenummer: 01108305.2
(22) Anmeldetag: 02.04.2001
(51) Int. Cl.: B62K 3/00, B62K 15/00

(54) **Rollerboard**

(30) Priorität: 04.04.2000 DE 10016635; 30.11.2000 DE 20020344 U
(71) Anmelder: Euro-G.E.M. GmbH, 80939 München (DE)
(72) Erfinder: Nardone, Moamar, 80796 München (DE)
(74) Vertreter: Klunker . Schmitt-Nilson . Hirsch

(57) **Zusammenfassung**

Rollerboard (2) mit einer in Fahrtrichtung verlaufenden Längsachse, aufweisend:
(a) ein Trittelement (4), auf das sich der Benutzer stellen kann, mit einem in Fahrtrichtung vorderen und einem hinteren Endbereich (6,8);
(b) mindestens ein Rad (10), das am hinteren Endbereich (8) des Trittelements (4) vorgesehen ist,
(c) zwei lenkbare Räder (12,14), die je zu einer Seite der Längsachse versetzt am vorderen Endbereich des Trittelements vorgesehen sind,
(d) einen Lenkmechanismus (18), an dem die zwei lenkbaren Räder (12,14) angebracht sind und der am vorderen Endbereich des Trittelements (4) so angebracht ist, daß ein Verschwenken des Trittelements (4) um seine Längsachse das Einlenken der Vorderräder (12,14) bewirkt; und
(e) eine Steuerstange (20), die an das Trittelement (4) angeschlossen ist und die der Benutzer mit der Hand beim Fahren halten kann,
dadurch gekennzeichnet,
daß der Lenkmechanismus (18) derart ausgebildet ist, daß die zwei Vorderräder (12,14) gemeinsam um eine gemeinsame Vorderrad-Lenkachse (30) einlenkbar sind, die in der Neutralposition im wesentlichen rechtwinkelig zu der Verbindungslinie (16) der zwei Vorderräder und im wesentlichen senkrecht zu der Längsachse (28) vorgesehen ist.

## Beschreibung

Die vorliegende Erfindung betrifft ein Rollerboard mit einer in Fahrtrichtung verlaufenden Längsachse, aufweisend:
(a) ein Trittelement, auf das sich der Benutzer stellen kann, mit einem in Fahrtrichtung vorderen und einem hinteren Endbereich;
(b) mindestens ein Rad, das am hinteren Endbereich des Trittelements vorgesehen ist,
(c) zwei lenkbare Räder, die je zu einer Seite der Längsachse versetzt am vorderen Endbereich des Trittelements vorgesehen sind,
(d) einen Lenkmechanismus, an dem die zwei lenkbaren Räder angebracht sind und der am vorderen Endbereich des Trittelements so angebracht ist, daß ein Verschwenken des Trittelements um seine Längsachse das Einlenken der Vorderräder bewirkt; und
(e) eine Steuerstange, die an das Trittelement angeschlossen ist und die der Benutzer mit der Hand beim Fahren halten kann.

Derartige Geräte, die Merkmale von Kinder-Tretrollern, Skateboards und Inline-Skater aufweisen, sind in jüngster Zeit auf den Markt gekommen und haben das Zeug dazu, sich zu Trendsportgeräten zu entwickeln, wie das auch bei den Skateboards bzw. den Inline-Skatern der Fall war. Ein Nachteil bei bisher käuflichen Geräte ist der relativ hohe Preis, der zum Teil durch die sehr aufwendige Konstruktion bedingt ist. So ist der Lenkmechanismus bei einer käuflichen Ausführungsform mit zwei einzeln drehbar aufgehängten Vorderrädern ausgebildet, was entsprechend aufwendig in der Herstellung ist.

Es ist deshalb eine Aufgabe der vorliegenden Erfindung, ein Rollerboard bereitzustellen, das einen deutlich einfacheren Aufbau hat.

Diese Aufgabe wird erfindungsgemäß dadurch gelöst, daß der Lenkmechanismus derart ausgebildet ist, daß die zwei Vorderräder gemeinsam um eine gemeinsame Vorderrad-Längsachse einlenkbar sind, die in der Neutralposition im wesentlichen rechtwinklig zu der Verbindungslinie der zwei Vorderräder und im wesentlichen senkrecht zu der Längsachse vorgesehen ist.

Bei dieser Ausführungsform können die beiden Vorderräder um eine einzige gemeinsame Vorderrad-Lenkachse gedreht werden und damit eine Kurvenfahrt des Rollerboards bewirken. Die Ausbildung mit lediglich einer Lenkachse anstelle von zwei Lenkachsen, wie bisher beim Stand der Technik vorgesehen, hat den Vorteil, daß eine geringere Maßhaltigkeit der Teile und eine weniger genaue Einstellung der Einzelteile beim Zusammenbau erforderlich sind. Dementsprechend ergibt sich ein deutliches Einsparpotential.

Vorzugsweise ist für die Vorderräder eine Rückstelleinrichtung vorgesehen, die bestrebt ist, die ausgelenkten Vorderräder in die Neutralposition zurückzustellen. Eine derartige Rückstelleinrichtung stellt einen relativ stabilen Geradeauslauf sicher, was aus Gründen der Fahrsicherheit durchaus wünschenswert ist. Je kräftiger die Rückstelleinrichtung ausgebildet ist, desto stabiler ist der Geradeauslauf, aber desto weniger schnell spricht auch die Lenkung des Rollerboards auf gewünschte Richtungsänderungen an. Es wird deshalb erforderlich sein, eine Abwägung zwischen Stabilität einerseits und Wendigkeit andererseits bei der Auslegung der Rückstelleinrichtung vorzunehmen.

Vorzugsweise ist die Rückstelleinrichtung dadurch gebildet, daß die Vorderrad-Lenkachse gegenüber der Längsachse des Rollerboards mit einem Winkel angeordnet ist, der etwas kleiner oder etwas größer als der rechte Winkel ist. Dabei wird davon ausgegangen, daß die Längsachse des Rollerboards im Neutralzustand, d. h. in der Position, in der das Rollerboard geradeaus fährt, parallel zu der Ebene ist, auf der das Rollerboard aufsteht, d. h. der virtuellen Ebene, die von den Berührungspunkten der Räder mit dem Untergrund gebildet ist. Jede Schrägstellung der Vorderrad-Lenkachse gegenüber dem rechten Winkel zu dieser Längsachse hat zur Folge, daß die Ebene, in der sich die beiden Vorderräder um die Vorderrad-Lenkachse drehen, aus der Ebene des Untergrunds verdreht ist. Für die folgende Erläuterung wird als Konvention festgelegt, daß dieser Winkel von der Längsachse zur Vorderrad-Lenkachse nach oben beginnend, im Uhrzeigersinn gemessen ist. Ist folglich der Winkel kleiner als 90°, so ist die Vorderrad-Lenkachse oberhalb der Längsachse nach vorne in Richtung auf die Längsachse hin verschwenkt und die Ebene, in der sich die Vorderräder um die Vorderrad-Lenkachse drehen, ist nach vorne unten verkippt. Werden beispielsweise die Vorderräder so um die Vorderrad-Lenkachse gedreht, daß sich das linke Rad nach vorne bewegt und das rechte Rad nach hinten, so bewegen sich beide Räder auf der Drehebene, d. h. das linke Rad bewegt sich nach vorne unten, während sich das rechte Rad nach hinten oben bewegt. Da das Rollerboard mit den mindestens drei Rädern auf dem Untergrund aufsteht, führt dies dazu, daß das Rollerboard um seine Längsachse verdreht wird. Bei einer gleichmäßigen Belastung des Trittelements des Rollerboards wird diese gleichmäßige Belastung tendenziell eine Rückbewegung in die Neutralposition der beiden Vorderräder hervorrufen. Prinzipiell ist der Effekt der gleiche, wenn der Winkel größer als 90° ist. Dann ist die Drehebene der Vorderräder nach hinten unten verkippt, was beim Einlenken dazu führt, daß das Trittelement nach Kurven außen verschwenkt wird. Grundsätzlich ist es günstiger, wenn das Trittelement beim Einlenken zur Kurveninnenseite hin verschwenkt wird. Das entspricht der Kurvenlage des Fahrers und erleichtert das Einnehmen der Kurvenlage. Alternativ oder zusätzlich zu der schräg gestellten Vorderrad-Lenkachse können auch beispielsweise Federn oder auch andere elastische Elemente als Rückstelleinrichtungen vorgesehen sein. Beispielsweise kann die Vorderrad-Lenkachse von einer oder zwei Rückstellfedern in der Neutralposition gehalten sein.

Vorzugsweise weist der Lenkmechanismus eine Längsschwenkachse auf, um die das Trittelement relativ zu den Vorderrädern verschwenkbar ist, und die funktional zwischen der Vorderrad-Lenkachse und dem Trittelement vorgesehen ist. Das Trittelement kann damit um die Längsschwenkachse verschwenkt werden. Auch hier ist es günstig, wenn eine Rückstellmechanismus dafür sorgt, daß im wesentlichen die Neutralposition beibehalten bleibt. Dafür bieten sich beispielsweise eine oder mehrere Federn oder anderes elastisches Material an.

Vorzugsweise ist ein Mitnehmermechanismus vorgesehen, der eine Verschwenkbewegung des Trittelements in eine Lenkbewegung der Vorderräder um die Vorderrad-Lenkachse umsetzt. Beispielsweise kann ein deichselartiger Mitnehmer mit den beiden Vorderrädern verbunden sein und an das Trittelement angeschlossen sein, so daß eine Verschwenkbewegung des Trittelements eine Drehbewegung der Vorderräder um die Vorderrad-Lenkachse bewirkt. Ein Verschwenken des Trittelements um die Längsachse führt dann zu einem Einlenken in die Kurve. Der Lenkmechanismus kann dann im wesentlichen aus nur drei Bauteilen bestehen, die günstig hergestellt werden können und auf relativ einfache Art und Weise miteinander verbunden sind. Das erlaubt eine einfache und kostengünstige Herstellung.

Vorzugsweise ist die Steuerstange mit dem Trittelement über ein Schwenklager gekoppelt, mit dessen Hilfe die Steuerstange auf das Trittelement klappbar ist. Vorzugsweise ist dem Schwenklager ein Feststeller zugeordnet.

Gemäß einer alternativen Ausführungsform betrifft die vorliegende Erfindung ein Rollerboard mit einer in Fahrtrichtung verlaufenden Längsachse, aufweisend:
(a) ein Trittelement, auf das sich der Benutzer stellen kann, mit einem in Fahrtrichtung vorderen und einem hinteren Endbereich;
(b) mindestens ein Rad, das am hinteren Endbereich des Trittelements vorgesehen ist,
(c) mindestens ein lenkbares Rad, das am vorderen Endbereich des Trittelements vorgesehen ist,
(d) eine Steuerstange, die an das Trittelement angeschlossen ist und die der Benutzer mit der Hand beim Fahren halten kann;
wobei an dem Rollerboard eine Sperreinrichtung zum Sichern der Steuerstange in der aufgeklappten Position vorgesehen ist und zusätzlich dem Schwenklager ein Feststeller zugeordnet ist. Rollerboards werden generell insbesondere in Städten auch häufig als Fortbewegungsmittel benutzt, insbesondere für relativ kurze Distanzen. Durch ihre geringe Größe ist es auch möglich, sie in öffentlichen oder anderen Verkehrsmitteln mitzunehmen. Durch die in etwa im rechten Winkel abstehende Steuerstange sind Rollerboards dennoch einigermaßen sperrig und trotz ihres relativ geringen Gewichts nicht ganz problemlos transportierbar.

Die Transportierbarkeit von Rollerboards ist bereits dadurch verbessert worden, daß die Steuerstange des Rollerboards mit dem Trittelement über ein Schwenklager aus einer Position im wesentlichen parallel zu dem Trittelement in eine Position im wesentlichen rechtwinkelig dazu klappbar verbunden ist. Diese Ausbildung des Rollerboards ermöglicht es, die Steuerstange des Rollerboards in eine Abklapp-Position abzuklappen, in der die Steuerstange im wesentlichen parallel mit dem Trittelement ist. Das verringert einerseits die Abmessung des Rollerboards in eine Richtung rechtwinkelig zu dem Trittelement; andererseits eröffnet diese Art des Abklappens der Steuerstange die Möglichkeit, die Steuerstange als "Tragegriff" für das Rollerboard zu verwenden.

Bei einem marktüblichen Rollerboard ist eine Sperreinrichtung in der Form eines an der Lenkstange bzw. einem Befestigungselement angebrachten federbelasteten Raststifts vohanden, der in der aufgeklappten Position bzw. in der abgeklappten Position der Lenkstange in eine Rastöffnung einrastet und so die Lenkstange in dieser Position hält.

Aus sicherheitstechnischer Sicht ist diese Lösung nicht optimal. Einerseits kann es sein, daß der Raststift nicht perfekt eingerastet ist. Andererseits kann es zu einem Bruch der Feder kommen, so daß der Raststift nicht sicher in der Raststellung gehalten ist. Bei einem Abklappen der Lenkstange während des Fahrens kann es zu gravierenden Unfällen kommen.

Mit der vorliegenden Erfindung wird die Betriebssicherheit des Schwenklagers eines Rollerboards verbessert.

Generell gibt es verschiedene technische Möglichkeiten dafür, das oder die lenkbare(n) Vorderrad(räder) bei einem Rollerboard anzuordnen. Typischerweise ist ein einzelnes Vorderrad direkt am unteren Ende der Steuerstange (bei dieser Ausführungsform wäre der Begriff "Lenkstange" angebrachter) befestigt vorzusehen. Die Steuerstange selbst ist ähnlich einer Fahrradlenkstange in einem Lenkkopflager drehbar an dem Trittelement befestigt. Typischerweise eher bei zwei lenkbaren Vorderrädern wird ein Lenkmechanismus verwendet, der derart ausgebildet ist, daß ein seitliches Verkippen der Steuerstange (relativ zur Längsachse des Rollerboards) ein Einlenken der Vorderräder auslöst. Beide Arten der Steuerung können auch miteinander kombiniert sein. Die erfindungsgemäße klappbare Ausbildung der Steuerstange läßt sich bei beiden Arten von Rollerboards realisieren. Während bei letzterer Ausbildung des Rollerboards die Steuerstange direkt an dem Trittelement angebracht sein kann, wird bei der ersten Ausbildung der Lenkung das Lenkkopflager typischerweise über ein Befestigungselement an dem Trittelement befestigt sein.

Wenn im nachfolgenden von dem "unteren Ende der Steuerestange, welches am Trittelement befestigt ist", die Rede sein wird, ist damit sowohl das eigentliche untere Ende der Steuerstange als auch das Befestigungselement umfaßt.

Vorzugsweise ist eine Sperreinrichtung für die Steuerstange vorgesehen, welche die Steuerstange in der aufgeklappten Position (Fahr- oder Betriebsstellung) sichert und vorzugsweise auch in der Lage ist, die Steuerstange in der abgeklappten Position zu sichern. Ohne eine derartige Sicherung in der abgeklappten Position wäre es nicht möglich, die Steuerstange als Tragegriff für das Rollerboard zu verwenden.

Eine besonders bevorzugte Ausgestaltung des Schwenklagers sieht vor, daß das Schwenklager ein Paar Führungsplatten aufweist, zwischen denen das untere Ende der Steuerstange oder das Befestigungselement für die Steuerstange an einer Schwenkachse gelagert ist, und daß zumindest eine der Führungsplatten und das untere Ende der Steuerstange bzw. das Befestigungselement von einem Raststift durchsetzt werden, der etwa rechtwinklig zur Schwenkebene der Steuerstange zwischen einer Freigabe- und einer Raststellung verlagerbar ist.

Typischerweise kann der Raststift federbelastet sein, um bei Erreichen einer Raststellung, typischerweise also der aufrechten Stellung der Steuerstange entsprechend oder - im zusammengeklappten Zustand des Rollerboards - der zum Trittelement hin verschwenkten Lage der Steuerstange entsprechend, selbsttätig einzurasten, um die jeweilige Stellung der Steuerstange beizubehalten. Um die Lage der Steuerstange zu ändern, kann der Raststift gegen die Federbelastung verlagert werden, um die Verrastung zu lösen, so daß die Steuerstange in die gewünschte Richtung verschwenkt werden kann, bis sie die alternative Raststellung erreicht und der Raststift wieder einrastet.

In einer besonders günstigen Ausgestaltung sieht die Erfindung vor, daß in einer der Führungsplatten eine bezüglich der Schwenkachse konzentrische, kreisbogenförmige Raststiftführung ausgebildet ist, an deren beiden Enden je eine Raststellung definiert ist. Vorzugsweise entsprechen die beiden Raststellungen der Betriebsstellung, also der etwa senkrechten Stellung der Steuerstange, und der zusammengeklappten Stellung der Steuerstange, also etwa parallel zu dem Trittelement.

Zur zusätzlichen Fixierung und Halterung der Steuerstange in der verrasteten Stellung sieht die Erfindung in einer bevorzugten Ausgestaltung vor, daß dem Schwenklager ein Feststeller zugeordnet ist, wobei dieser wiederum besonders bevorzugt in jeder Führungsplatte ein bezüglich der Schwenkachse konzentrisches, kreisbogenförmiges Führungsloch aufweist, jeweils rechtwinklig zur Schwenkebene der Steuerstange von einem mit letzterer gekoppelten Zapfen durchsetzt, der von einem Klemmechanismus an den paarweisen Enden der Führungslanglöcher feststellbar ist.

Vorzugsweise kann die Steuerstange um etwa 90° in Richtung auf das Trittelement hin geklappt werden. Üblich sind Werte im Bereich von 85°.

Vorzugsweise ist das Schwenklager lösbar an dem Trittelement angebracht. Trittelemente sind typischerweise aus laminiertem Holz oder Aluminium und werden im Fahrbetrieb besonders beansprucht und unterliegen einem besonderen Verschleiß. Die Betriebssicherheit des Rollerboards wird dadurch typischerweise nicht beeinträchtigt, jedoch kann das Rollerboard durch den Verschleiß unansehnlich werden. Bei einer festen Anbringung des Schwenklagers and dem Trittelement bleibt als einzige Möglichkeit der Neukauf eines Rollerboards. Ist jedoch eine lösbare Anbringung vorgesehen, kann - insbesondere weil auch das Hinterrad und die Bremse üblicherweise lösbar an dem Trittelement angebracht sind - das Trittelement leicht ausgetauscht werden. Die Austaschbarkeit des Trittelements hat außerdem den Vorteil, daß unterschiedliche Trittelemente, die zu unterschiedlichen Fahreigenschaften führen, für ein Rollerboard vorgesehen sein können. Das kann insbesondere für den sportlicheren Bereich wünschenswert sein. So können längere Trittelemente für ein stabileres Fahrverhalten oder elastischer Trittelemente für die Ausführung von Kunststücken mit dem Rollerboard bevorzugt sein.

Vorzugsweise ist dafür eine Befestigungsplatte an dem Schwenklager vorgesehen. Die Befestigungsplatte und das Schwenklager können beispielsweise in der Art einer Skibindung an dem Trittelement angebracht werden.

Vorzugsweise ist das untere Ende der Steuerstange oder des Befestigungselements derart ausgebildet, daß im aufgeklappten Zustand der Steuerstange (Betriebsstellung) zwischen dem unteren Ende der Steuerstange bzw. dem unteren Ende des Befestigungselements und dem Trittelement bzw. der Befestigungsplatte für das Schwenklager ein genügend großer Abstand verbleibt, damit ein Eingeklemmt-Werden von Gegenständen oder Körperteilen dazwischen im wesentlichen vermieden ist. Insbesondere ist es bevorzugt, wenn der Abstand dazwischen mindestens fingerdick ist, d.h. mindestens 1 cm, vorzugsweise 2 cm und mehr, beträgt.

Es sind kürzlich Rollerboards auf den Markt gekommen, die Schwenkmechanismen aufweisen, bei denen zwischen dem unteren Ende der Steuerstange bzw. dem unteren Ende des Befestigungselements und dem Trittelement bzw. der Befestigungsplatte praktisch kein Abstand ist. Insbesondere kommt bei diesen Rollerboards hinzu, daß das untere Ende des Befestigungselements rechteck-rohrförmig mit scharfen Kanten ausgebildet ist. Bei der Benutzung derartiger Rollerboards ist es zu schweren Unfällen gekommen, bei denen in Einzelfällen Finger komplett abgetrennt wurden. Bei den von der Anmelderin vertriebenen Rollerboards waren aus Sicherheitsgründen von Anfang an die rechteck-rohrförmigen Befestigungselemente an ihrem unteren Ende derart ausgebildet, daß der Abstand ausreichend groß ist, um derartige Unfälle zu vermeiden. Insbesondere waren und sind bei diesen Rollerboards der Anmelderin die unteren Enden der Befestigungselemente so weit abgeschrägt, daß sich ein ausreichend großer Abstand ergibt. Vorzugsweise ist deshalb das untere Ende des Befestigungselements bzw. der Steuerstange derart abgeschrägt, daß sich zwischen diesem Ende und dem Trittelement bzw. der Befestigungsplatte ein ausreichend großer Abstand ergibt.

Vorzugsweise ist das untere Ende der Steuerstange oder das untere Ende des Befestigungselements verschlossen. Als Abdeckung kann beispielsweise eine Abdeckung aus Kunststoffmaterial vorgesehen sein.

Vorzugsweise ist an dem Rollerboard eine Bremseinrichtung vorgesehen, vorzugsweise wird die Bremseinrichtung von einer Bewegung der Steuerstange aus aktiviert, wobei es besonders bevorzugt ist, daß ein Nach-Vorne-Schwenken der Steuerstange einen Bremsvorgang auslöst. Alternativ kann die Bremseinrichtung auch durch eine Fußbetätigung ausgelöst werden. Dann ist es günstig, wenn das normalerweise hinten stehende Standbein zur Betätigung der Bremse herangezogen wird. Wird die Steuerstange verwendet, um einen Bremsvorgang auszulösen, so ist es bevorzugt, eine Bremsverriegelungseinrichtung vorzusehen, die ein Nach-Vorne-Schwenken der Steuerstange zum Bremsen erst dann erlaubt, wenn diese vorher entriegelt worden ist. Das verhindert, daß im Fall eines unbeabsichtigten Nachvornelehnens an die Steuerstange ein Bremsvorgang ausgelöst wird, und durch die nachfolgende Verstärkung des Nachvornelehnens durch das Bremsen noch verstärkt wird und schließlich dazu führt, daß der Benutzer das Gleichgewicht nicht mehr halten kann und nach vorne von dem Rollerboard fällt. Vorzugsweise ist die Entriegelungseinrichtung am oberen Ende der Steuerstange vorgesehen und ein Nach-Vorne-Schwenken der Steuerstange erst nach Betätigung der Entriegelungseinrichtung möglich.

Vorzugsweise weist die Bremseinrichtung mindestens eine Bremsrolle und mindestens eine Verlagerungseinrichtung auf, welche für einen Bremsvorgang die mindestens eine Bremsrolle zur Verzögerung mit mindestens einem der Räder in Eingriff bringt. Es ist günstig, wenn die Bremsrolle nur für einen Bremsvorgang mit dem Rad in Eingriff gebracht wird, d. h. gegen dieses drückt, wodurch eine Verschlechterung der Rolleigenschaften des Rollerboards beim üblichen Gebrauch vermieden ist. Es ist günstig, wenn die Verlagerungseinrichtung ein Schlitten oder eine Schubstange ist, an dem die mindestens eine aber vorzugsweise alle Bremsrollen befestigt sind. Dieser Schlitten kann in einer Führung beispielsweise unterhalb des Trittelements angebracht sein, indem er beispielsweise in eine Art Nut eingreift und von dieser geführt ist. Über einen Hebelmechanismus kann dieser Schlitten bei einem Nach-Vorne-Bewegen der Steuerstange beispielsweise nach hinten verlagert werden, wodurch die Bremsrolle mit dem Rad in Eingriff gebracht wird. Es ist günstig, wenn die Einrichtung zur Übertragung der Nachvornebewegung der Steuerstange auf die Bremsrolle so ausgelegt ist, daß die Drehpunkte und die Länge der Hebelarme bzw. die Kraftangriffspunkte so gewählt werden, daß sich günstige Kraftverhältnisse also beispielsweise eine Kraftübersetzung oder eine Kraftuntersetzung ergeben.

In einer alternativen bevorzugten Ausführungsform der Bremseinrichtung weist diese einen am hinteren Ende des Trittelements schwenkbar gelagerten Fußbremshebel auf, der mit einem auf das hintere Rad wirkenden Reibmechanismus gekoppelt ist. Dieser Reibmechanismus enthält wiederum vorzugsweise eine Bremsrolle, die gleichzeitig auf das Hinterrad und einen Bremsklotz einwirkt, so daß der Bremsklotz die Bremsrolle abbremst und die Bremsrolle ihrerseits das Hinterrad abbremst. Diesbezüglich ähnelt die alternative Bremsvorrichtung der oben beschriebenen Bremsvorrichtung. Es ist bei der alternativen Bremseinrichtung als Betätigungsmittel der Fußbremshebel vorgesehen, so daß ein einfaches Abbremsen möglich ist, indem der Benutzer einfach mit der Ferse eines Fußes auf den Fußbremshebel drückt.

Die Erfindung wird nachfolgend anhand von Ausführungsbeispielen genauer beschrieben; es zeigen:
- Fig. 1: eine Ausführungsform eines erfindungsgemäßen Rollerboards in perspektivischer Ansicht;
- Fig. 2: Details einer Bremseinrichtung eines Rollerboards;
- Fig. 3: eine perspektivische Darstellung eines Schwenklagers, das schematisch in Fig. 1 angedeutet ist;
- Fig. 4: eine seitliche Ansicht zweier miteinander in Blickrichtung der Figur fluchtender Führungsplatten des Schwenklagers nach Fig. 3;
- Fig. 5: eine Radialschnittansicht des Schwenklagers nach Fig. 3 in einer Zwischenstellung zwischen zwei Raststellungen;
- Fig. 6: eine zweite Ausführungsform eines erfindungsgemäßen Rollerboards mit einem Schwenklager, wie es in den Fig. 3 bis 5 dargestellt ist, und mit einer alternativen Bremseinrichtung; und
- Fig. 7: eine vergrößerte Darstellung der in Fig. 6 schematisch dargestellten Bremseinrichtung.

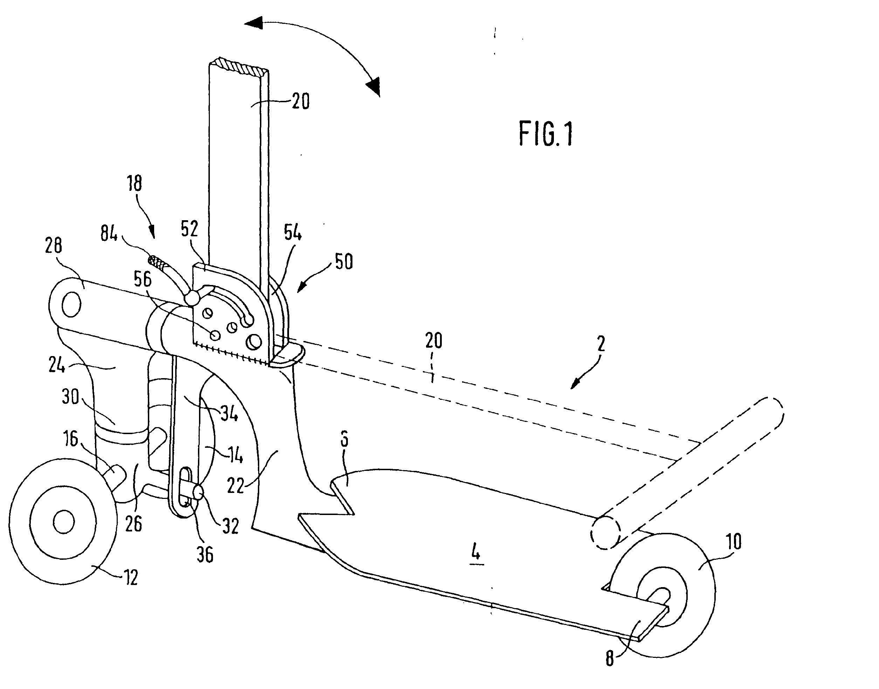

In der Fig. 1 erkennt man ein Rollerboard 2 mit einem Trittelement 4, auf das sich ein Benutzer bei Benutzung stellen kann. Das Trittelement 4 weist einen in Fahrtrichtung vorderen Endbereich 6 und einen in Fahrtrichtung hinteren Endbereich 8 auf. Desweiteren ist ein Rad 10 am hinteren Endbereich des Trittelements drehbar befestigt vorgesehen. Im Bereich des vorderen Endbereichs 6 des Trittelements 6 sind zwei Räder 12, 14 an einer Achse 16 miteinander verbunden vorgesehen. Die Räder 12, 14 sind über einen Lenkmechanismus 18 mit dem Trittelement 6 verbunden. An dem Lenkmechanismus 18 ist eine Steuerstange 20 angebracht.

Der Lenkmechanismus 18 weist im wesentlichen drei Einzelteile auf: das Anschlußteil 22 zum Anschließen an das Trittelement 6, das Zwischenteil 24 und den Drehschemel 26, an dem die Achse 16 mit den Rädern 12, 14 angebracht ist. Das Zwischenteil 24 ist an dem Anschlußteil 22 über die Längsschwenkachse 28 angebracht. Der Drehschemel 26 ist an dem Zwischenteil 24 um die Vorderrad-Lenkachse 30 drehbar befestigt. Bei den Achsen 28, 30 kann es sich beispielsweise um Zapfen oder Bolzen handeln, die an einem der beiden drehbar gegeneinander angebrachten Teile befestigt ist und in dem anderen in einer zylinderförmigen Bohrung drehbar gelagert ist. An dem Drehschemel 26 ist ein deichselartiger Zapfen 32 befestigt, der in einem an dem Anschlußteil 22 befestigten Mitnehmer 34, und dort insbesondere in einer Öffnung 36 geführt ist. Wird beim Fahren das Trittelement 4 mit dem Hinterrad 10 um die Längsschwenkachse 28 mit der Steuerstange 20 gekippt, so nimmt der Mitnehmer 34 den Zapfen 32 mit und dreht den Drehschemel 26 mit der Achse 16 und den Rädern 12, 14 um die Vorderrad-Lenkachse 30. Die Vorderräder 12, 14 werden so in die Kurve eingelenkt. Die Steuerstange 20 ist über das Anschlußteil 22 des Lenkmechanismus 18 an dem Trittelement 4 befestigt.

Die Steuerstange 20 ist an dem Anschlußteil 22 über ein Schwenklager 50 derart gekoppelt, daß sie nach Öffnen eines Feststellers und Lösen eines Raststifts nach hinten in die durch unterbrochene Linien gezeigte Position geklappt werden kann. In dieser Konfiguration ist das Rollerboard 2 leichter zu verstauen und zu transportieren.

Das Trittelement 4 kann beispielsweise aus einem Holz oder Kunststoffmaterial gebildet sein. Es kann aber beispielsweise auch aus Metall, insbesondere einem Leichtmetall wie Aluminium hergestellt sein. Günstigerweise sind auch das Anschlußteil 22, das Zwischenteil 24 und der Drehschemel aus Metall. Besonders günstig sind Metalldruckgußteile in ihrer Herstellung. Es ist möglich, den Mitnehmer 34 einstückig mit dem Anschlußteil 22 auszubilden. Alternativ ist es auch möglich, den Zapfen 32 bis an das Anschlußteil 22 selbst hinzuverlängern und dort beispielsweise in einer Öffnung zu führen. Um ein Spiel zwischen der Öffnung 36 bei dem Mitnehmer 22 bzw. der entsprechenden Öffnung direkt in dem Teil 22 und den deichselartigen Zapfen 32 zu vermeiden, kann der Zapfen 32 beispielsweise in einer Buchse aus elastisch nachgiebigem Kunststoffmaterial geführt sein.

Im Bereich der Längsschwenkachse und/oder der Vorderrad-Lenkachse können zusätzliche Elemente, beispielsweise Schraubfedern oder andere buchsenartige Teile aus federelastischem Material vorgesehen sein, die dafür sorgen, daß das Zwischenteil 24 derart an dem Anschlußteil 22 bzw. der Drehschemel 26 derart an dem Zwischenteil 24 angebracht sind, daß diese, wenn keine Kräfte auf sie wirken, in die Neutralposition zurückkehren, d. h. in eine Position, in der Rollerboard 2 geradeaus fährt. Eine Rückstelleinrichtung kann auch dadurch vorgesehen sein, daß die Vorderrad-Längsachse 30 nicht rechtwinklig zu der Längsschwenkachse 28 vorgesehen ist, sondern mit einem Winkel angeordnet ist, der etwas kleiner oder etwas größer als der rechte Winkel ist. Das führt dazu, daß die Ebene, in der sich die Achse 16 bzw. die Räder 12, 14 gegen das Zwischenteil 24 verdrehen, leicht nach vorne unten bzw. nach hinten unten verkippt ist. Die Schwerkraft und insbesondere das Gewicht des auf dem Trittelement 4 stehenden Benutzer sorgt dann für eine Rückkehr in die Neutralposition. Andererseits sorgt auch die geometrische Anordnung der Längsschwenkachse, die in ihrer Verlängerung deutlich oberhalb des Hinterrads 10 verläuft, für eine Rückstellung durch die Schwerkraft in die Neutralposition, da durch ein seitliches Verschwenken des Trittelements 4 dieses in seinem vorderen Bereich angehoben wird. Das Gewicht des Benutzers ist bestrebt, das Trittelement 4 wieder in die energetisch günstigste, d. h. tiefste Position zu drehen. Diese Position ist die Neutralposition.

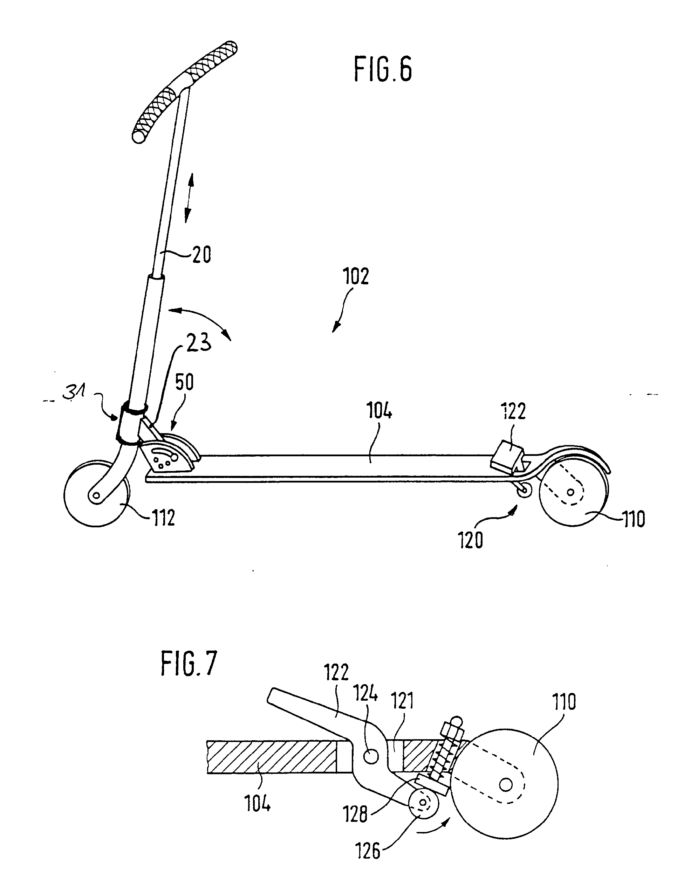

Das oben erwähnte Schwenklager 50, welches die Steuerstange 20 mit dem Trittelement 4 über das Anschlußteil 22 oder das Befestigungselement 23 (vgl. Fig. 6) verbindet, besitzt ein Paar parallel zueinander und jeweils in Längsrichtung des Rollerboards 2 verlaufende Führungsplatten 52 und 54, die senkrecht zu ihrer Ebene von einer Schwenkachse 56 durchsetzt werden, an der das untere Ende der Steuerstange 20 bzw. das Befestigungselement 23 gelagert ist. In den beiden Führungsplatten 52 und 54 ist ein Rastmechanismus sowie ein Feststeller ausgebildet, die weiter unten noch näher erläutert werden. Der Feststeller besitzt einen Hebel 84, nach dessen Öffnen ein in Fig. 1 nicht dargestellter Zapfen gelöst wird, so daß die Steuerstange 20 in Richtung des Trittelements 4 geklappt werden kann. Das Klappen der Steuerstange 20 ist durch einen Doppelpfeil markiert.

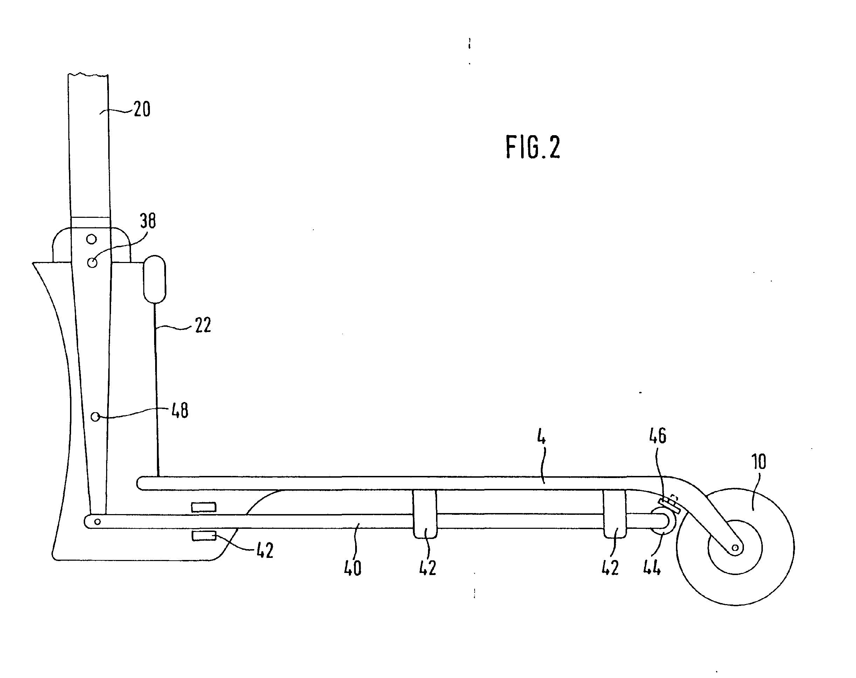

In der Fig. 2 ist eine Bremseinrichtung gezeigt, die über die Steuerstange 20 betätigt wird. Die Steuerstange 20 ist an dem Anschlußteil 22 um die Achse 38 nach vorne bzw. nach hinten schwenkbar befestigt. Die Steuerstange 20 ist nach unten in das Anschlußteil 22 hin fortgesetzt und an ihrem unteren Ende an eine Schubstange 40 angeschlossen. Die Schubstange 40 ist von Führungselementen 42 an der Unterseite des Trittelements 4 geführt. An dem hinteren Ende der Schubstange 40 ist eine Bremsrolle 44 angebracht, die mit dem Hinterrad 10 zusammenwirken kann. Desweiteren ist ein Bremsklotz 46 vorgesehen, der federvorbelastet gegen die Bremsrolle 44 steht. Die Steuerstange 20 ist normalerweise von einer Bremsverriegelungseinrichtung, die in der Fig. 2 durch Zapfen 48 gezeigt ist, die von dem unteren Fortsatz der Steuerstange 20 zur Seite in entsprechende Öffnungen in dem Anschlußteil 22 hineinragen, gehalten. Der mindestens eine Zapfen 48 kann durch die Betätigung einer nichtgezeigten Entriegelungseinrichtung in den unteren Fortsatz der Steuerstange 20 zurückgezogen werden, worauf sich die Steuerstange 20 um den Drehpunkt 38 nach vorne schwenken läßt. Ein Nach-Vorne-Schwenken der Steuerstange 20 bewirkt eine Verlagerung der Schubstange 40 in Richtung auf das Hinterrad. Gleichzeitig wird die Bremsrolle 44 mit dem Hinterrad in Eingriff gebracht und bei einer weiteren Nachhintenbewegung zunehmend mit dem Bremsklotz 46 in Eingriff gebracht, was schließlich zu einem Bremsen des Hinterrads führt.

Die Materialwahl bei Bremsklotz 46, Bremsrolle 44 und Hinterrad ist vorzugsweise dergestalt, daß die Bremsrolle 44 auf dem Hinterrad 10 nicht blockiert sondern tatsächlich der Reibeingriff zwischen Bremsklotz 46 und Reibrolle 44 erfolgt, während die Bremsrolle 44 die Verzögerung lediglich auf das Hinterrad überträgt.

Bei der Entriegelungseinrichtung kann es sich beispielsweise um einen am oberen Ende der Steuerstange 20 vorgesehenen Hebel in der Art eines Fahrradbremshebels handeln, von dem aus beispielsweise ein Bowdenzug die Entriegelungsbewegung nach unten auf die Zapfen 48 überträgt. Ein einfacher Umlenkmechanismus kann beispielsweise in dem unteren Fortsatz der Steuerstange 20 vorgesehen sein, um bei einer Entriegelungsbewegung die Zapfen 48 in die Stange zurückzuziehen.

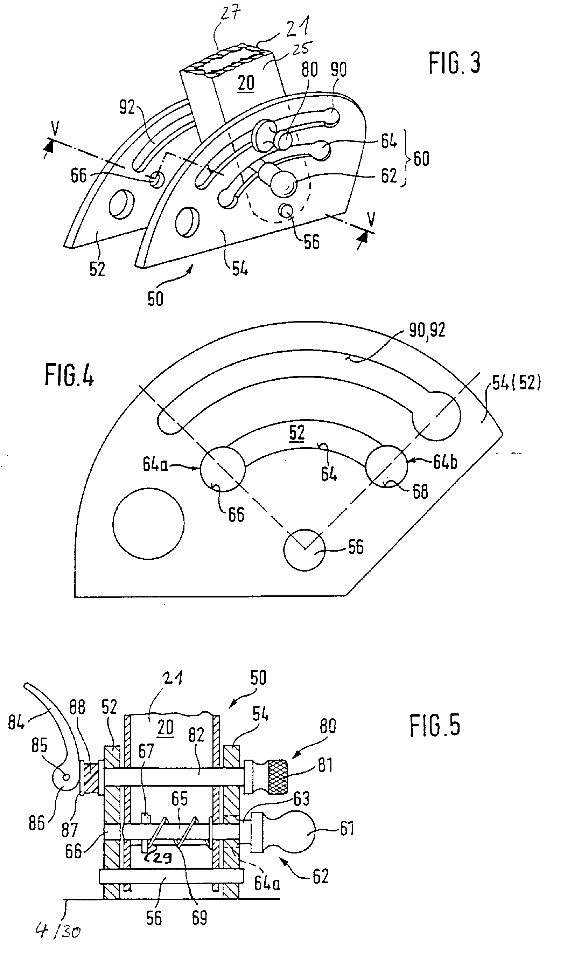

Fig. 3 zeigt das in Fig. 1 schematisch dargestellte Schwenklager 50 zum Koppeln der Steuerstange 20 mit dem Trittelement 4. Das Schwenklager 50 besitzt das Paar von Führungsplatten 52 und 54, die an dem Zwischenelement 22 (bei der Ausführungsform nach Fig. 1) bzw. an dem Trittelement 4 oder an einer (nicht gezeigten Befestigungsplatte, die wiederun an dem Trittelement 4 festgeschraubt ist, (bei der Ausführungsform nach Fig. 6) angeschweißt sind. Fig. 4 zeigt die in axialer Richtung der Schwenkachse 56 miteinander fluchtenden Führungsplatten 90 und 92.

Konzentrisch zu der Schwenkachse 56 sind in beiden Führungsplatten 52 und 54 ein Führungslangloch 90 bzw. 92 ausgebildet. In der Führungsplatte 54 ist eine Raststiftführung 64 ausgebildet, die an ihren beiden Enden mit Rastausnehmungen 64a bzw. 64b ausgestattet ist. Fluchtend zu diesen beiden Rastausnehmungen 64a und 64b befinden sich in der anderen (in Fig. 4 hinteren) Führungsplatte 52 Rastlöcher 66 und 68, deren Funktion weiter unten noch erläutert wird.

Ein Raststift 62 (Fig. 3) durchsetzt die Raststiftführung 64 und das untere Ende der Steuerstange 20 bzw. des Befestigungselements 23 und ist Teil eines Rastmechanismus 60, mit dessen Hilfe die Steuerstange 20 in einer vorderen Raststellung (rechts in Fig. 2) oder in einer hinteren Raststellung (links in Fig. 3) verrastet werden kann. Ein Feststeller 80 durchsetzt die beiden Führungslanglöcher 90, 92 in den beiden Führungsplatten, außerdem das untere Ende der Steuerstange 20 bzw. des Befestigungselements 23. An dem in Fig. 3 verdeckten Ende besitzt der Feststeller einen Klemmechanismus, so daß die Steuerstange in der vorderen oder hinteren Raststellung entsprechend die Rastausnehmung 64a oder 64b durch Klemmen zusätzlich festgestellt werden kann.

Fig. 5 zeigt eine Radialschnittansicht des Schwenklagers 50. Zwischen den beiden Führungsplatten 52 und 54 befindet sich das untere Ende der Steuerstange 20 bzw. des Befestigungselements 23, so daß die Steuerstange 20 sich um die Schwenkachse 56 verschwenken läßt. Der Rastmechanismus 60 umfaßt den Raststift 62 mit einem endseitigen Griff 61 und einem Schaftteil 65, wobei sich zwischen dem Schaftteil 65 und dem Griff 61 ein Raststück 63 befindet. Dieses Raststück 63 hat einen Durchmesser, der größer ist als die Breite der Raststiftführung 64 in der Führungsplatte 54 (vgl. Fig. 4), und der etwas geringer ist als der Durchmesser der beiden Rastausnehmungen 64a und 64b der Führungsplatte 54. Der Durchmesser des Schaftteils 65 ist etwas kleiner als der Durchmesser der beiden Rastlöcher 66 und 68 (in Fig. 5 ist das eine Rastloch 66 dargestellt, entsprechend der versetzten Schnitt-ebene V-V in Fig. 3; die Rastausnehmung 64a ist in Fig. 5 gestrichelt angedeutet).

Befindet sich die Steuerstange 20 in einer Stellung, in der der Raststift 62 mit einer der Rastausnehmungen 64a oder 64b fluchtet, so rückt der Raststift 62 in Fig. 5 nach links. Dies wird erreicht durch die Feder 79, die gegen eine auf dem Schaftteil 65 fixierte Scheibe 67 drückt und sich dabei an der Innenwand der Steuerstange 20 bzw. des Befestigungselements 23 abstützt.

Dadurch, daß der Raststift 62 gemäß Fig. 5 nach links rückt, rastet das vordere Ende des Schaftteils 65 in das Rastloch 66 ein, gleichzeitig rastet das Raststück 63 in die Rastausnehmung 64a ein. Da der Raststift das untere Ende der Steuerstange 20 bzw. des Befestigungselements durchsetzt, wird diese also fixiert.

Zur zusätzlichen Feststellung der Steuerstange 20 dient ein Feststeller 80, umfassend einen mit einem Kopf 81 ausgestatteten Zapfen 82, an dessen dem Kopf 81 abgewandtem Ende ein Hebel 84 an einem Lagerstift 85 gelagert ist, welcher den Zapfen 82 rechtwinklig durchsetzt. Im Bereich des Lagerzapfens 85 ist der Hebel 84 als Steuerkurve ausgebildet, mit dem die Gummimuffe 88 gegen die Außenseite der Führungsplatte 52 drückbar ist, um die Steuerstange 20 festzustellen, indem der Zapfen 82 durch Reibschluß an den beiden Führungsplatten 52 und 54 und durch Formschluß in der Steuerstange 20 bzw. dem Befestigungselement 23 gehalten wird.

Zum Umklappen der Steuerstange 20 wird der Feststeller durch Verschwenken des Hebels 84 geöffnet, durch Ziehen an dem Griff 61 wird der Raststift 62 gelöst, anschließend kann die Steuerstange 20 verschwenkt werden.

In den Figuren 3 und 5 erkennt man, wie das untere Ende der Steuerstange 20 bzw. des Befestigungselements 23 abgerundet ausgebildet ist. Diese Abrundung hat den Vorteil, daß die vordere Wand 21 der Steuerstange 20 bzw. des Besfestigungselements 23 bei weitem nicht so weit bis nach unten gezogen ist, wie das bei den Seitenwänden 25, 27 der Fall ist. So ist in der Darstellung der Fig. 5 das untere Ende 29 der vorderen Wand 21 erkennbar. Insbesondere erkennt man, daß zwischen dem unteren Ende 29 der vorderen Wand 21 und dem Trittelement 4 bzw. der Befestigungsplatte 30 ein ausreichender Abstand vorgesehen ist, um ein Einklemmen von Gegenständen oder Körperteilen dazwischen zu verhindern. Der Abstand sollte mindestens in etwa finderdick sein. Etwa 1 cm oder mehr sind besonders günstig. Die Kanten in diesem Bereich sind abgerundet vorgesehen, damit, falls es doch zu einem Einklemmen kommen sollte, dieser Bereich nicht wie eine Schneidkante wirken kann.

Fig. 6 und 7 zeigen eine alternative Ausführungsform eines Rollerboards 102 mit einem Trittelement 104, das ein (einziges) Vorderrad 112 und ein Hinterrad 102 aufweist. Im vorderen Teil des Trittelements 104 befindet sich das Schwenklager 50, dessen Einzelheiten oben bereits erläutert wurden. Bei dieser Ausführungsform ist die Steuerstange 20 ähnlich wie bei einem Fahrrad in einem Lenkkopflager 31 drehbar gehaltert. Lenkkopflager 31 und damit die Steuerstange 20 sind über ein Befestigungselement 23 und das Schwenklager 50 an dem Trittelement angeschlossen.

Fig. 6 und 7 zeigen im hinteren Endbereich des Trittelements 104 eine Bremseinrichtung 120 in Form einer Fußbremse mit einem Fußbremshebel 122.

Wie in Fig. 7 zu sehen ist, ist der Fußbremshebel 122 in einer Ausnehmung 121 des Trittelements 104 mittels eines Lagerzapfens 124 gelagert. Von einer (nicht dargestellten) Feder kann der Fußbremshebel 122 im Uhrzeigersinn gemäß Fig. 7 vorgespannt sein. Tritt der Benutzer des Rollerboards mit der Ferse auf den Fußbremshebel 122, so wird dieser im Gegenuhrzeigersinn verschwenkt, so daß eine am unteren Ende des Fußbremshebels 122 gelagerte Bremsrolle 126 gegen einen federbelasteten Bremsklotz 128 und gleichzeitig gegen die Außenfläche des Hinterrads 110 wirkt, so daß das Hinterrad 110 abgebremst wird.

Der Bremsklotz 128 wird von einem Stift gehalten, auf dem eine Feder sitzt, die am Ende des Stifts von einer Mutter gesichert ist, so daß der Bremsklotz gegen die Bremsrolle 126 gedrückt wird. Die in Fig. 7 angedeutete Feder, die den Bremsklotz belastet, kann gleichzeitig dazu dienen, den Fußbremshebel 122 in die Ruhestellung vorzuspannen.

## Patentansprüche

1. Rollerboard (2) mit einer in Fahrtrichtung verlaufenden Längsachse, aufweisend:
(a) ein Trittelement (4), auf das sich der Benutzer stellen kann, mit einem in Fahrtrichtung vorderen und einem hinteren Endbereich (6, 8);
(b) mindestens ein Rad (10), das am hinteren Endbereich (8) des Trittelements (4) vorgesehen ist,
(c) zwei lenkbare Räder (12; 14), die je zu einer Seite der Längsachse versetzt am vorderen Endbereich des Trittelements vorgesehen sind,
(d) einen Lenkmechanismus (18), an dem die zwei lenkbaren Räder (12; 14) angebracht sind und der am vorderen Endbereich (8) des Trittelements (4) so angebracht ist, daß ein Verschwenken des Trittelements (4) um seine Längsachse das Einlenken der Vorderräder (12; 14) bewirkt; und
(e) eine Steuerstange (20), die an das Trittelement (4) angeschlossen ist und die der Benutzer mit der Hand beim Fahren halten kann,
**dadurch gekennzeichnet,**
**daß** der Lenkmechanismus (18) derart ausgebildet ist, daß die zwei Vorderräder (12; 14) gemeinsam um eine gemeinsame Vorderrad-Lenkachse (30) einlenkbar sind, die in der Neutralposition im wesentlichen rechtwinkelig zu der Verbindungslinie (16) der zwei Vorderräder und im wesentlichen rechtwinklig zu der Längsachse (28) vorgesehen ist.

2. Rollerboard (2) nach Anspruch 1, **dadurch gekennzeichnet, daß** eine Rückstelleinrichtung vorgesehen ist, die bestrebt ist, die ausgelenkten Vorderräder (12; 14) in die Neutralposition zurückzustellen.

3. Rollerboard (2) nach Anspruch 2, **dadurch gekennzeichnet, daß** die Rückstelleinrichtung von der Vorderrad-Lenkachse (30) dadurch gebildet ist, **daß** diese gegenüber der Längsachse (28) mit einem Winkel angeordnet ist, der etwas kleiner oder etwas größer als der rechte Winkel ist.

4. Rollerboard (2) nach einem der Ansprüche 1 bis 3, **dadurch gekennzeichnet, daß** der Lenkmechanismus (18) eine Längsschwenkachse (28) aufweist, um die das Trittelement (4) relativ zu dem Vorderrädern (12; 14) verschwenkbar ist und die funktional zwischen der Vorderrad-Lenkachse (30) und dem Trittelement (4) vorgesehen ist.

5. Rollerboard (2) nach Anspruch 4, **dadurch gekennzeichnet, daß** ein Mitnehmermechanismus (32; 34) vorgesehen ist, der eine Verschwenkbewegung des Trittelements (4) in eine Lenkbewegung der Vorderräder (12; 14) um die Vorderrad-Lenkachse (30) umsetzt.

6. Rollerboard nach einem der Ansprüche 1 bis 5, **dadurch gekennzeichnet, daß** die Steuerstange (20) mit dem Trittelement über ein Schwenklager gekoppelt ist, mit dessen Hilfe die Steuerstange auf das Trittelement (4, 104) klappbar ist.

7. Rollerboard nach Anspruch 6, **dadurch gekennzeichnet, daß** dem Schwenklager (50) ein Feststeller (80) zugeordnet ist.

8. Rollerboard (2) mit einer in Fahrtrichtung verlaufenden Längsachse, aufweisend:
a) ein Trittelement (4), auf das sich der Benutzer stellen kann, mit einem in Fahrtrichtung vorderen und einem hinteren Endbereich (6, 8);
b) mindestens ein Rad (10), das am hinteren Endbereich (8) des Trittelements (4) vorgesehen ist,
c) mindestens ein lenkbares Rad (12), das am vorderen Endbereich des Trittelements vorgesehen ist, und
d) eine Steuerstange (14), die an das Trittelement (4) angeschlossen ist, die der Benutzer beim Fahren mit der Hand halten kann und die mit dem Trittelement (4) über ein Schwenklager (50) gekoppelt ist,
**dadurch gekennzeichnet,**
**daß** eine Sperreinrichtung zum Sichern der Steuerstange (14) in der aufgeklappten Position vorgesehen ist und zusätzlich dem Schwenklager (50) ein Feststeller (80) zugeordnet ist.

9. Rollerboard (2) nach einem der Ansprüche 6 bis 8, **dadurch gekennzeichnet, daß** das Schwenklager ein Paar Führungsplatten (52, 54) aufweist, zwischen denen das untere Ende der Steuerstange (20) an einer Schwenkachse (56) gelagert ist, und **daß** zumindest eine der Führungsplatten (52, 54) und das untere Ende der Steuerstange (20) von einem Raststift (62) durchsetzt werden, der etwa rechtwinklig zur Schwenkebene der Steuerstange (20) zwischen einer Freigabe- und einer Raststellung verlagerbar ist.

10. Rollerboard (2) nach Anspruch 9, **dadurch gekennzeichnet, daß** in einer (54) der Führungsplatten (52, 54) eine bezüglich der Schwenkachse (56) konzentrische, kreisbogenförmige Raststiftführung (64) ausgebildet ist, an deren beiden Enden je eine Raststellung definiert ist.

11. Rollerboard (2) nach Anspruch 9 oder 10, **dadurch gekennzeichnet, daß** der Feststeller (80) in jeder Führungsplatte (52, 54) ein bezüglich der Schwenkachse (56) konzentrisches, kreisbogenförmiges Führungslangloch (90, 92) aufweist, jeweils rechtwinklig zur Schwenkebene der Steuerstange (20) von einem mit letzterer gekoppelten Zapfen (52) durchsetzt, der von einem Klemmechanismus (84 - 88) an den paarweisen Enden der Führungslanglöcher (90, 92) feststellbar ist.

12. Rollerboard (2) nach einem der Ansprüche 6 bis 11, **dadurch gekennzeichnet, daß** das Schwenklager (50) lösbar an dem Trittelement (4) angebracht ist.

13. Rollerboard (2) nach einem der Ansprüche 6 bis 12, **dadurch gekennzeichnet, daß** das untere Ende der Steuerstange (20) derart ausgebildet ist, **daß** im aufgeklappten Zustand der Steuerstange (20) zwischen dem unteren Ende der Steuerstange (20) und dem Trittelement (4) ein genügend großer Abstand verbleibt, damit ein Eingeklemmtwerden von Gegenständen oder Körperteilen dazwischen im wesentlichen vermieden ist.

14. Rollerboard (2) nach Anspruch 13, **dadurch gekennzeichnet, daß** das untere Ende der Steuerstange (20) derart abgeschrägt ist, **daß** sich ein genügend großer Abstand zwischen diesem Ende (28) und dem Trittelement (4) ergibt.

15. Rollerboard (2) nach Anspruch 13 oder 14, **dadurch gekennzeichnet, daß** das untere Ende der Steuerstange (20) verschlossen ist.

16. Rollerboard (2) nach einem der vorangehenden Ansprüche, **dadurch gekennzeichnet, daß** eine Bremseinrichtung vorgesehen ist.

17. Rollerboard (2) nach Anspruch 16, **dadurch gekennzeichnet, daß** die Bremseinrichtung derart mit der Steuerstange (20) verbunden ist, **daß** ein Nachvorneschwenken der Steuerstange (20) einen Bremsvorgang auslöst.

18. Rollerboard (2) nach Anspruch 17, **dadurch gekennzeichnet, daß** eine Bremsverriegelungseinrichtung (48) mit einer Entriegelungseinrichtung am oberen Ende der Steuerstange (20) vorgesehen ist, die ein Nachvorneschwenken der Steuerstange (20) erst nach Betätigung der Entriegelungseinrichtung erlaubt.

19. Rollerboard (2) nach Anspruch 16 oder 17, **dadurch gekennzeichnet, daß** die Bremseinrichtung mindestens eine Bremsrolle (44) und mindestens eine Verlagerungseinrichtung (40) aufweist, welche für einen Bremsvorgang die mindestens eine Bremsrolle (44) zur Verzögerung mit mindestens einem der Räder (10) in Eingriff bringt.

20. Rollerboard nach Anspruch 16, **dadurch gekennzeichnet, daß** die Bremseinrichtung (120) einen am hinteren Endbereich des Trittelements 104 schwenkbar gelagerten Fußbremshebel (122) aufweist, der mit einem auf das hintere Rad (110) wirkenden Reibmechanismus (126, 128) gekoppelt ist.
